# EUROPÄISCHE PATENTSCHRIFT

(11) **EP 2 869 998 B1**
(45) Veröffentlichungstag und Bekanntmachung des Hinweises auf die Patenterteilung: **31.05.2017**
(21) Anmeldenummer: 13736860.1
(22) Anmeldetag: 05.07.2013
(51) Int. Cl.: B42D 15/00, B41M 3/14, B41M 5/24

(54) **VERFAHREN ZUR HERSTELLUNG VON FARBIG PERSONALISIERBAREN SICHERHEITSDOKUMENTENROHLINGEN, FARBIG PERSONALISIERTE SICHERHEITSDOKUMENTE UND VERFAHREN ZUR PERSONALISIERUNG**
METHOD FOR PRODUCING SECURITY DOCUMENT BLANKS THAT CAN BE PERSONALIZED IN COLOR, SECURITY DOCUMENTS PERSONALIZED IN COLOR, AND METHOD FOR PERSONALIZATION
PROCÉDÉ DE DEMANDE DE BREVET D'ÉBAUCHES DE DOCUMENTS DE SÉCURITÉ PERSONNALISABLES EN COULEURS, DOCUMENTS DE SÉCURITÉ PERSONNALISÉS EN COULEURS ET PROCÉDÉ DE PERSONNALISATION

(30) Priorität: 05.07.2012 DE 102012211767
(43) Veröffentlichungstag der Anmeldung: 13.05.2015
(73) Patentinhaber: Bundesdruckerei GmbH, 10969 Berlin (DE)
(72) Erfinder: SPRINGMANN, Edward, 10249 Berlin (DE)
(74) Vertreter: Patentanwälte Bressel und Partner mbB
(86) Internationale Anmeldenummer: PCT/EP2013/064221
(87) Internationale Veröffentlichungsnummer: WO 2014/006173

(56) Entgegenhaltungen:
- EP-A1- 1 918 123
- WO-A1-2011/124774
- DE-A1-102005 011 612
- US-A- 5 364 829
- US-A1- 2008 106 002

## Beschreibung

Die Erfindung betrifft allgemein das Gebiet der Herstellung von Sicherheitsdokumenten, Sicherheitsdokumentenrohlingen sowie ein Verfahren zur nachträglichen Personalisierung von Sicherheitsdokumentenrohlingen. Insbesondere betrifft die Erfindung ein Verfahren zur Herstellung von Sicherheitsdokumentenrohlingen, welche für eine nachträgliche dezentralisierte farbige Personalisierung vorgesehen sind, solche Sicherheitsdokumentenrohlinge und ein Verfahren zur farbigen Personalisierung.

Sicherheitsdokumente sind Dokumente, welche mindestens ein Merkmal umfassen, welches ein Nachahmen, Duplizieren, Verfälschen oder Ähnliches zumindest erschwert oder unmöglich macht. Ein solches Merkmal wird als Sicherheitsmerkmal bezeichnet. Dokumente, die zumindest ein Sicherheitsmerkmal umfassen, werden als Sicherheitsdokumente bezeichnet. Sicherheitsdokumente umfassen beispielsweise Reisepässe, Personalausweise, Identitätskarten, Führerscheine, Visa, Bankkarten, Postwertzeichen, Banknoten, andere Wertdokumente, wie beispielsweise Telefonkarten aber auch gegen eine Fälschung abgesicherte Eintrittskarten und/oder Verpackungen, um nur einige beispielhaft zu nennen.

Insbesondere für solche Sicherheitsdokumente, die einzelnen Individuen zugeordnet werden, ist es wünschenswert, dem Individuum zugeordnete persönliche Informationen oder andere individuelle Informationen in dem Sicherheitsdokument dauerhaft abzuspeichern. Diese sollen darüber hinaus für eine Verifikation anschließend für einen menschlichen Betrachter oder in einem maschinellen Erfassungsverfahren erfassbar und auswertbar sein.

Aus dem Stand der Technik sind Verfahren bekannt, bei denen die individuellen oder persönlichen Daten bereits bei der Herstellung des Sicherheitsdokuments in dieses integriert werden. Beispielsweise werden persönliche und/oder individuelle Daten auf eine Substratschicht aufgedruckt, welche dann anschließend mit weiteren Substratschichten zu einem Dokumentenkörper zusammengefügt wird. Besonders fälschungssichere Sicherheitsdokumente werden heutzutage mit einem Dokumentenkörper hergestellt, der aus mehreren Substratschichten, insbesondere Kunststoffschichten zusammengefügt ist. Sind die Kunststoffschichten beispielsweise alle auf Basis ein und desselben Polymermaterials hergestellt, so können diese in einem Hochdruck-Hochtemperatur-Laminationsverfahren zu einem monolithischen Dokumentenkörper zusammengefügt werden. Als monolithisch wird ein Dokumentenkörper dann bezeichnet, wenn die ursprünglichen Grenzflächen, an denen die Substratschichten beim Laminieren aufeinander gefügt sind, in dem fertigen Dokumentenkörper aufgrund der Kunststoffstruktur nicht mehr erkennbar sind. Aufgrund anderer Eigenschaften der verschiedenen Substratschichten, beispielsweise aufgrund von Einfärbungen mit Farbmitteln, können die unterschiedlichen ursprünglichen Substratschichten in einem monolithischen Dokumentenkörper sehr wohl noch als Materialschichten erkennbar sein.

Eine Vielzahl von Sicherheitsmerkmalen, die eine besonders hohe Sicherheit verleihen, können nur in einer zentralen Fertigungseinrichtung in die Sicherheitsdokumente integriert werden. Hierzu zählen beispielsweise holografische Strukturen, aber auch ein Einbringen von elektronischen Strukturen, beispielsweise eines Mikrochips oder Ähnlichem. Dennoch ist es häufig wünschenswert, Sicherheitsdokumente, die mit solchen Hochsicherheitsmerkmalen versehen sind, kurzfristig und gegebenenfalls auch dezentral zuverlässig personalisieren zu können.

Aus dem Stand der Technik ist es beispielsweise bekannt, einzelne Substratschichten auf Kunststoffbasis so auszubilden, dass diese gegenüber anderen Kunststoffschichten eine Absorption von Laserlicht begünstigen und dennoch hinsichtlich ihrer Transparenz in dem sichtbaren Wellenlängenbereich nicht nennenswert eingeschränkt sind. Solche Substratschichten werden auch als laserfähige Substratschichten bezeichnet. Über ein Einstrahlen fokussierter Laserstrahlung können diese in einem fertiggestellten Dokumentenkörper lokal permanent eingefärbt, insbesondere geschwärzt werden. Hierbei sind abhängig von der eingestrahlten Laserenergie Abstufungen hinsichtlich der Schwärzung erreichbar, so dass auch Graustufen darstellbar sind. Nachteilig an den bisher bekannten Verfahren ist es jedoch, dass hierüber nur Schwarzweiß- oder Graustufendarstellungen speicherbar sind.

Aus der WO 02/035444 A1 ist ein Verfahren zum Einschreiben von Daten, insbesondere Personalisierungsdaten, auf und/oder in einen Datenträger mittels elektromagnetischer Strahlung bekannt, wobei bei dem Verfahren ein beliebiger Datenträger bereitgestellt wird, auf und/oder in welchen mindestens ein Farbmittel mindestens lokal vorgesehen wird, und dieses Farbmittel mittels der elektromagnetischen Strahlung von mindestens einem Wellenlängenbereich bestrahlt wird, so dass sich im Bereich der Bestrahlung eine Änderung der Farbe des Farbmittels durch Bleichen ergibt, wobei diese Farbänderung maschinell und/oder durch ein menschliches Auge feststellbar ist. Hierdurch soll eine farbige nachträgliche Personalisierung erreicht werden. Solche und andere Verfahren haben sich jedoch bisher nicht als praktikabel für eine Massenherstellung von Sicherheitsdokumenten erwiesen. Farbige, insbesondere vollfarbige intensive Abbildungen oder Informationseinspeicherungen sind bisher nicht möglich.

Aus der WO 2004/089638 A1 sind ein Verfahren zur Erzeugung einer Information, ein Trägerkörper, in dem die Information erzeugt wird, sowie die Verwendung eines derartigen Trägerkörpers bekannt. In dem Verfahren zur Erzeugung einer Information in einem Trägerkörper ist vorgesehen, eine besonders gegenüber Licht und Feuchtigkeit langzeitstabile Information zu erzeugen. Dazu werden für eine Anzahl von im Trägerkörper vorgehaltenen Ausgangsstoffen in einem lokalisierten Teilbereich des Trägerkörpers durch Laserbestrahlung diejenigen Reaktionsbedingungen eingestellt, die die Ausgangsstoffe zu einer Synthesereaktion veranlassen. Das Endprodukt einer solchen Synthesereaktion weist vorzugsweise eine Farbe einer Grundfarbe eines Farbsystems auf.

Aus der WO 2009/021737 A1 sind ein Verfahren sowie eine Vorrichtung zur farbigen Individualisierung von Sicherheitsdokumenten sowie Sicherheitsdokumente mit einem Dokumentenkörper zur farbigen Individualisierung bekannt. Bei einem solchen Dokumentenkörper sind im Innern Ausgangsstoffe vorgehalten, die mittels eines lokalisierten Energieeintrags gezielt zur Ausbildung von Nanoteilchen unterschiedlicher Gestalt und/oder unterschiedlicher lokaler Konzentration anregbar sind, wobei ein Farbeindruck der Nanoteilchen von ihrer Gestalt und/oder ihrer Konzentration abhängig ist. Zur Individualisierung eines Sicherheitsdokuments mit solch einem Dokumentenkörper wird gezielt Energie an einer Stelle lokal eingebracht, an der ein farbiger Farbeindruck in dem Dokumentenkörper herbeigeführt werden soll, um eine individualisierende Information über den herbeigeführten Farbeindruck zu speichern. Die Vorrichtung zur Individualisierung umfasst eine Energiequelle, mittels der gezielt Energie in den Dokumentenkörper gesteuert eingebracht werden kann.

Aus der WO 2011/104331 A1 sind eine Markierungsvorrichtung für ein Wert- oder Sicherheitsdokument sowie ein Verfahren zum dauerhaften, insbesondere individuellen mehrfarbigen Markieren von Wert- und/oder Sicherheitsdokumenten bekannt. Das Verfahren zum farbigen dauerhaften Markieren eines Wert- oder Sicherheitsdokuments umfasst die Schritte: Bereitstellen eines Dokumentenkörpers, der Bereiche unterschiedlicher Farbigkeit umfasst, wobei die einzelnen Bereiche jeweils einfarbig sind; Bereitstellen einer Markierungsvorrichtung, welche mindestens eine Laserlichtquelle zum Erzeugen von Laserlicht und eine Lichtführungsvorrichtung umfasst, die mit der mindestens einen Laserlichtquelle gekoppelt ist, so dass ein Fokus des Laserlichts der Laserlichtquelle auf oder in dem Dokumentkörper des Wert- oder Sicherheitsdokuments gesteuert positionierbar ist; iteratives gezieltes Positionieren des Fokus auf oder in dem Dokumentenkörper und Einstrahlen des Laserlichts, um gezielt lokal die Farbe eines oder mehrere der Bereiche zu verändern, so dass der Dokumentkörper anschließend einen mehrfarbigen Farbeindruck bei einer Bestrahlung mit weißem Licht für einen menschlichen Betrachter hervorruft, wobei das Laserlicht mittels kurzer oder ultrakurzer Laserpulse eingestrahlt wird, die eine Plusdauer von weniger als 100 ps oder weniger als 10 ps aufweisen. Hierdurch können nicht lineare Wechselwirkungen zwischen dem Material des Wert- oder Sicherheitsdokuments und dem Laserlicht zum Markieren ausgenutzt werden. Es lässt sich hierdurch eine verbesserte Fokussierung des Laserlichts und hierüber eine höhere Dichte der die Farbigkeit festlegenden farbigen Markierungen nutzen oder erzeugen, so dass eine höhere Farbintensität realisierbar ist.

Aus der WO 2012/069536 A1 ist ein Wert- und/oder Sicherheitsdokument bekannt, das vorzugsweise mindestens eine Dokumentenlage aufweist. In einer oder mehreren ersten Ebenen befindet sich ein aus ersten Bildelementen gebildetes erstes Muster. Ferner befindet sich in einer oder mehreren zweiten Ebenen ein aus zweiten Bildelementen gebildetes und zu den ersten Bildelementen des ersten Musters passergenau angeordnetes zweites Muster. Die zweiten Bildelemente befinden sich von einer Sichtseite des Dokuments aus gesehen vor den ersten Bildelementen. Nur über einem Teil der ersten Bildelemente ist jeweils ein zweites Bildelement angeordnet. Sind die ersten Bildelemente farbig, so kann über ein selektives Ausbilden der zweiten Bildelemente eine farbige Information kodiert werden.

Aus der WO 2012/069547 A1 ist ebenfalls ein Wert- und/oder Sicherheitsdokument bekannt, das mindestens eine Dokumentenlage aufweist. In einer oder mehreren ersten Ebenen befindet sich ein aus ersten Bildelementen gebildetes erstes Muster. Ferner befindet sich in einer oder mehreren zweiten Ebenen ein aus zweiten Bildelementen gebildetes und zu den ersten Bildelementen des ersten Musters passergenau angeordnetes zweites Muster. Die zweiten Bildelemente befinden sich zwischen den ersten Bildelementen und Außenseiten des Wert- und/oder Sicherheitsdokuments. Nur über einem Teil der ersten Bildelemente ist jeweils ein zweites Bildelement angeordnet. Die ersten Musterelemente werden transparent und oder transluzent ausgebildet. Auch das übrige Wert- und/oder Sicherheitsdokument wird bezogen auf eine Sichtachse im Bereich der ersten Musterelemente bis auf die zweiten Musterelemente transparent und/oder transluzent ausgebildet, so dass im Durchlicht eine durch die Muster festgelegte Information wahrnehmbar ist. Sind die ersten Bildelemente farbig, ist auch die Information farbig.

Die EP 1 918 123 A1 zeigt den Oberbegriff des Anspruchs 1 oder 7, oder einen kartenförmigen Datenträger mit einem Substrat mit einem Aufzeichnungsbereich für Informationen sowie ein Verfahren zu seiner Herstellung. Um in dem Aufzeichnungsbereich bunte Farbinformation in hoher Qualität mittels Laserstrahl aufbringen zu können, ist in dem Aufzeichnungsbereich eine Farbstoffschicht aufgebracht, auf der eine die Farbstoffschicht vollständig überlagernde Abdeckschicht vorgesehen ist. Zum Aufzeichnen von Information ist es somit nur erforderlich, die Abdeckschicht entsprechend der darzustellenden Information mit einem die Farbstoffschicht freigebenden Muster zu versehen, also teilweise zu entfernen.

Die WO 2011/124774 A1 zeigt den Oberbegriff des Anspruchs 1 oder 7, oder eine Vorrichtung zur Individualisierung einer latenten Abbildung, die unter einer transparenten mechanischen Schutzschicht angeordnet ist. Die latente Abbildung besteht aus gleichförmig verteilten sogenannten Subpixeln, die eine primäre Farbe plus die Farbe weiß aufweisen, wobei die Oberfläche jedes Subpixels der latenten Abbildung teilweise oder ganz in eine dunkelfarbige, nicht reflektierende Oberfläche über die Einwirkung von Laserstrahlung durch die transparente Schutzschicht hindurch umgewandelt wird, sodass eine graue Skala für die endgültig individualisierte Abbildung geschaffen wird.

Aus der US 2008/0106002 A1 ist ein laminiertes Identifikationsdokument aus einer Mehrzahl von laminierten Schichten und einer darauf angebrachten Identifikationsabbildung beschrieben. Das Dokument umfasst eine Kernlaminationsschicht mit einer oberen Oberfläche und einer unteren Oberfläche, wobei auf mindestens eine der Oberflächen ein Punktmatrixmuster gedruckt ist, welches von einer opaken oder reflektierenden Laminationsschicht vollständig überdeckt ist. Durch Ausbilden von Aussparungen in der opaken oder reflektierenden Schicht werden die darunter befindlichen Farbpunkte sichtbar und hierdurch ein Farbmuster gespeichert. Das Ausbilden der Aussparung kann mittels Laserstrahlung erfolgen.

Der Erfindung liegt somit die Aufgabe zugrunde, die aus dem Stand der Technik bekannten Nachteile zu beseitigen und ein Herstellungsverfahren für farbig personalisierbare Sicherheitsdokumente, farbig personalisierbare Sicherheitsdokumentenrohlinge und Sicherheitsdokumente und Sicherheitsdokumentenrohlinge sowie ein Verfahren zur farbigen Laserpersonalisierung von Sicherheitsdokumentenrohlingen zu schaffen.

Der Erfindung liegt die Idee zugrunde, in einen Sicherheitsdokumentenkörper eine Substratschicht mit einer dünnen Metallschicht einzubringen, welche Licht reflektiert. Zusätzlich wird auf der oder in der Metallschicht ein farbwirksames Muster ausgebildet, welches Bildpunkte aufweist und wobei jeder Bildpunkt mindestens zwei Unterbildpunkte aufweist oder umfasst, die jeweils eine monochromatische Farbwirkung hervorrufen. Überdeckt bzw. abgedeckt wird die Metallschicht und das farbwirksame Muster durch eine transparente Kunststoffschicht, welche eine äußere mechanische Beschädigung und/oder Manipulation verhindert. Aufgrund der eine unterschiedliche Farbwirkung hervorrufenden Unterbildpunkte eines jeden Bildpunktes ergibt sich bei geeigneter Größengestaltung der Bildpunkte und Unterbildpunkte aufgrund der Farbmischung bei einem menschlichen Betrachter ein Farbeindruck, der von den Farbeindrücken der jeweils eine monochromatische Farbwirkung hervorrufenden Unterbildpunkte abweicht. Von einem Betrachter wird somit eine Mischfarbe wahrgenommen. Eben solches gilt bei einer Erfassung mittels einer Kamera, welche nicht in der Lage ist, die einzelnen Unterbildpunkte getrennt aufzulösen.

Ein solcher Sicherheitsdokumentenrohling kann anschließend personalisiert werden, indem ausgehend von den Personalisierungsdaten die Farbwirkung einzelner Unterbildpunkte beseitigt wird. Anhand der farbigen Personalisierungs- und/oder Individualisierungsdaten werden somit die monochromatischen Unterbildpunkte ermittelt, welche zum Hervorrufen des jeweiligen Farbeindrucks aufgrund der Farbmischung notwendig sind. Die übrigen Bildpunkte werden nun so manipuliert, dass deren Farbwirkung nicht mehr auftritt. Dies wird dadurch erreicht, dass gezielt lokal über ein Einstrahlen fokussierter elektromagnetischer Strahlung, insbesondere fokussierter Laserstrahlung, die Metallschicht demetallisiert wird und zwar in jenen Gebieten oder an jenen Stellen, denen die zu entfernenden Unterbildpunkte des Farbmusters zugeordnet sind, welche zur farbigen Darstellung der entsprechenden individualisierten oder personalisierten Informationen nicht notwendig sind.

### Definitionen

Als Metallschicht wird jede Schicht aufgefasst, welche metallische Elemente, Legierungen von Metallen und/oder Metalloxid oder andere Metallverbindungen umfasst, welche reflektierend sind. Insbesondere können diese Schichten aus Silber, Gold, Kupfer, Aluminium, Platin, Eisen oder auch Legierungen aus diesen Metallen gebildet sein.

Als sichtbares Licht wird Licht bezeichnet, welches in jenem Wellenlängenbereich liegt, welcher durch ein menschliches Auge erfassbar ist. Als infraroter Wellenlängenbereich wird der Wellenlängenbereich betrachtet, der sich dem sichtbaren Spektrum im langwelligen Bereich anschließt. Als UV-Strahlung wird der Teil des elektromagnetischen Spektrums aufgefasst, der sich an den kurzwelligen Wellenlängenbereich des sichtbaren Spektrums anschließt.

Ein Bildpunkt ist eine Informationseinheit, der ein bestimmter Farbton zugeordnet ist. Ein Unterbildpunkt ist ein monochrom ausgebildeter Bestandteil eines Bildpunkts, der gemeinsam mit anderen Unterbildpunkten zum Herbeiführen einer Farbwirkung des Bildpunktes bzw. dessen Farbton beiträgt. Als monochromatisch wird eine Farbwirkung bezeichnet, wenn ein Farbeindruck dem entspricht, den Licht mit einem eingegrenzten spektralen Wellenlängenbereich hervorruft.

Als Farbmischung wird das Hervorrufen eines Farbeindrucks bei einem menschlichen Betrachter verstanden, welches dadurch hervorgerufen wird, dass Licht unterschiedlicher Wellenlängen, welches unterschiedlichen Spektralfarben zugeordnet ist, bei dem menschlichen Betrachter gemeinsam einen Farbeindruck hervorrufen, der von den Farbeindrücken verschieden ist, die den entsprechenden Spektralfarben des bei der Farbmischung verwendeten Lichts entsprechen. Wird beispielsweise rotes, blaues und grünes Licht überlagert, so nimmt ein menschlicher Betrachter das Licht als weiß wahr. Werden spektral grünes und spektral rotes Licht überlagert, so wird die Überlagerung als gelbes Licht wahrgenommen. Eine Überlagerung von rotem und blauem Licht wird als magentafarbenes Licht wahrgenommen. Auf diese Weise lassen sich nahezu unendlich viele Farbeindrücke hervorrufen, sofern nicht nur die verwendeten Wellenlängen, sondern auch die Intensitätsanteile des Lichts unterschiedlicher Wellenlänge individuell angepasst werden können. Eine solche Anpassung kann beispielsweise über eine Anzahl der den einzelnen Spektralfarben oder Basisfarben eines Farbsystems zugeordneten Unterbildpunkte festgelegt werden, sofern jedem Bildpixel oder jedem Bildinformationsbestandteil, welche einen unterschiedlichen Farbton annehmen können, mehrere Unterbildpunkte ein und derselben monochromatischen Basisfarbe zugeordnet sind. Doch selbst wenn jedem Bildpunkt nur beispielsweise drei einen unterschiedlichen monochromatischen Farbeindruck hervorrufende Unterbildbereiche oder Unterbildpunkte zugeordnet sind, können mindestens sieben unterschiedliche Farbeindrücke hervorgerufen werden, beispielsweise bei einem Rot-Grün-Blau-Farbsystem die Farben Rot, Gelb, Grün, Zyan, Blau, Magenta und Weiß.

Es können bei einer Ausführungsform auch Farbmittel eingesetzt werden, die Licht bestimmter Wellenlängen absorbieren und hierüber einen Farbeffekt hervorrufen. Auch bei unterschiedlichen Farbmitteln dieser Art gibt es eine Farbmischung zur Erzielung eines Gesamtfarbeindrucks.

Der Bereich einer Metallschicht, der zusammen mit dem Unterbildpunkt des farbwirksamen Musters dessen Farbwirkung bei einer Betrachtung in Aufsicht herbeiführt, wird als Subpixelgebiet bezeichnet.

### Bevorzugte Ausführungsformen

Insbesondere wird ein Verfahren zum Herstellen von farbig laserpersonalisierbaren Sicherheitsdokumentenrohlingen oder Sicherheitsdokumenten vorgeschlagen, welches die Schritte umfasst: Bereitstellen einer Substratschicht mit einer Metallschicht oder Aufbringen einer Metallschicht auf eine Substratschicht; Ausbilden eines farbwirksamen Musters in oder auf der Metallschicht, wobei das farbwirksame Muster eine Bildpunktstruktur aufweist und jeder Bildpunkt mindestens zwei Unterbildpunkte umfasst, welche eine monochromatische Farbwirkung hervorrufen; und Zusammenfügen der Substratschicht mit mindestens einer weiteren transparenten Substratschicht zu einem Dokumentenkörper. Es ergibt sich somit ein Sicherheitsdokumentenrohling für eine farbige Laserpersonalisierung, welcher einen Dokumentenkörper umfasst, der eine Metallschicht und ein in oder auf der Metallschicht ausgebildetes farbwirksames Muster aufweist, wobei das farbwirksame Muster eine Bildpunktstruktur aufweist und jeder Bildpunkt mindestens zwei Unterbildpunkte umfasst, welche eine monochromatische Farbwirkung hervorrufen, und die Metallschicht und das farbwirksame Muster durch eine oder mehrere transparente Substratschichten abgedeckt ist. Ein solcher Sicherheitsdokumentenrohling bzw. ein Verfahren zur Herstellung eines Sicherheitsdokumentenrohlings lässt sich zu einem Verfahren zur Sicherheitsdokumentenherstellung bzw. einem Verfahren zur farbigen Laserpersonalisierung ausbilden, indem ein oben beschriebener Sicherheitsdokumentenrohling bearbeitet wird, indem farbige Personalisierungsinformationen erfasst werden, fokussierte elektromagnetische Strahlung, insbesondere ein fokussierter gepulster Laserstrahl, erzeugt wird und die fokussierte elektromagnetische Strahlung, insbesondere der fokussierter gepulster Laserstrahl, auf die Metallschicht gelenkt wird, so dass gezielt Gebiete der Metallschicht lokal demetallisiert werden, so dass die Farbwirkung der diesem gezielt demetallisierten Bereich zugeordneten Unterbildpunkte beseitigt wird. Das Lenken des fokussierten elektromagnetischen Strahlung, beispielsweise des fokussierten Laserstrahls, auf die Metallschicht erfolgt somit gesteuert entsprechend der farbigen Individualisierungsinformationen und/oder Personalisierungsinformationen.

Erfindungsgemäß wird oder ist die Metallschicht in Subpixelgebiete strukturiert, wobei jedem Subpixelgebiet ein Unterbildpunkt des farbwirksamen Musters zugeordnet ist.

Erfindungsgemäß ist vorgesehen, dass die Metallschicht so strukturiert wird, bzw. so strukturiert bereitgestellt wird, dass jedem Unterbildpunkt ein Subpixelgebiet der Metallschicht zugeordnet ist, das von benachbarten Subpixelgebieten getrennt und beabstandet ist. Die Metallschicht wird somit in Subpixelgebiete strukturiert. Besonders bevorzugt weisen die Subpixelgebiete hierbei eine geometrische Form auf, welche kreisförmig oder ellipsenförmig ist. Dies ist optimal an eine fokussierte elektromagnetische
Strahlung insbesondere an einen Laserstrahlquerschnitt eines fokussierten Lasers angepasst, so dass ein Subpixelgebiet vollständig in den Fokus eines optimal ausgerichteten Lasers bei der Demetallisierung liegt und dennoch kein benachbartes Subpixelgebiet mitbestrahlt wird. Eine Trennung der einzelnen Subpixel voneinander und eine gewisse Beabstandung bietet mehrere Vorteile. Ein Vorteil besteht darin, dass, sofern die Substratschicht eine Kunststoffschicht ist, diese sich mit einer darüber gedeckten weiteren Substratschicht, welche ebenfalls eine Kunststoffschicht ist, besser verbindet. Zwischen den einzelnen metallischen Subpixelgebieten können sich Stege aus Kunststoffmaterial beim Verbinden ausbilden. Ein weiterer Vorteil besteht darin, dass ein Energieeintrag mittels des fokussierten Lichts, insbesondere mittels fokussierten Laserlichts, nicht durch Wärmeleitungsprozesse in der Metallschicht in Bereiche abgeleitet werden kann, die nicht demetallisiert werden sollen. Eine gezielte lokalisierte Demetallisierung wird hierdurch vereinfacht und kann präzise vorgenommen werden. Eine gute Demetallisierung kann in der Regel auch erreicht werden, wenn der Fokus der Strahlung einen geringeren Durchmesser als ein Subpixelgebiet aufweist.

Bei einer Ausführungsform werden die Subpixelgebiete mittels Aufdampfens gefertigt. Beispielsweise kann auf die Substratschicht eine Maske aufgelegt werden, welche jene Bereiche abdeckt, die nicht mit der Metallschicht überzogen werden sollen. Alternativ ist es möglich, die Subpixelgebiete mittels eines lithografischen Verfahrens auszubilden.

Das farbwirksame Muster kann beispielsweise durch ein Aufbringen von Farbmitteln oder ein Einbringen von Farbmitteln in die Metallschicht ausgebildet werden. Möglich ist es beispielsweise erneut Masken zu verwenden, die angepasst an die Subpixelgebiete sind und zu diesen ausgerichtet werden, so dass nur die Subpixelgebiete, welche einer bestimmten Unterbildpunktgruppe zugeordnet sind, welche die gleiche monochromatische Farbwirkung hervorrufen, zeitgleich beispielsweise mit Farbmitteln beschichtet werden. Ebenso ist es möglich, die Farbmittel beispielsweise während des Aufdampfens beizumengen und mehrere Bedampfungsprozesse mit unterschiedlichen aufeinander abgestimmten Masken auszuführen. Bei wieder einer anderen Ausführungsform, bei der die Subpixelgebiete lithografisch hergestellt werden, ist es möglich, die Metallschichten durch chemische Reaktion einzufärben. Bevorzugt werden jedoch Farbmittel auf die Metallschicht aufgebracht. Lithografisch strukturierte Metallschichten können somit mit auf beliebige Weise ausgeführten farbwirksamen Mustern verwendet werden.

Der große Vorteil der Erfindung besteht darin, dass in einer Metallschicht im Inneren eines Kunststoffkörpers, hier eines Sicherheitsdokumentenrohlings, über gepulste Laserenergie eine große Energiemenge streng lokalisiert eingebracht werden kann, die hinsichtlich der lateralen Ausdehnung entlang der Strahlrichtung auf ein sehr kleines Gebiet, nämlich die Schicht selber, sowie einen unmittelbar davor befindlichen Bereich begrenzt werden kann. Somit sind lokale Energiedichten erreichbar, die beim gewöhnlichen Durchstrahlen eines Kunststoffs nicht erreicht werden können, ohne diesen selbst beispielsweise zu karbonisieren. Metallschichten können jedoch innerhalb des Kunststoffkörpers durch Energieeintrag mittels elektromagnetischer Strahlung lokal so zerstört werden, dass diese an der demetallisierten Stelle transparent wird. Unmittelbar auf die Schicht aufgebrachte oder angeordnete Farbmittel können durch den Energieeintrag ebenfalls so zerstört werden, dass die Farbwirkung der Farbmittel lokal ebenfalls vollständig verschwindet.

Bei einer anderen Ausführungsform wird das farbwirksame Muster beispielsweise mittels holografischer Strukturen auf der Metallschicht ausgebildet. Bei einer Ausführungsform wird die Metallschicht selbst an ihrer Oberfläche strukturiert.

Bei einer wieder anderen Ausführungsform wird über der Metallschicht, insbesondere über der vorzugsweise bereits in Subpixelgebiete strukturierten Metallschicht ein Hologramm angeordnet, welches aus einer Vielzahl von Teilhologrammen besteht, die jeweils eine monochromatische Bildinformation für einen Unterbildpunkt des farbwirksamen Musters beinhalten. Beispielsweise kann es sich bei dem Hologramm um ein Volumentransmissionshologramm handeln, welches ein Punktmuster aufweist, wobei jedem Bildpunkt mehrere Unterbildpunkte zugeordnet sind. Das Volumentransmissionshologramm kann beispielsweise so ausgebildet sein, dass es aus einer vorgegebenen Richtung einfallendes Rekonstruktionslicht jeweils unter einer von der geometrischen Optik abweichenden Richtung auf den darunter befindlichen und dem Bildpunkt zugeordneten Bereich der Metallschicht lenkt. Jedes Teilhologramm lenkt Licht einer vorgegebenen spektralen Wellenlänge oder eines Spektralbereichs auf einen darunterliegenden Bereich, z.B. das darunterliegende zugeordnete Subpixelgebiet. Bei dem Volumentransmissionshologramm handelt es sich somit um ein Hologramm, welches mindestens zwei Typen von Teilhologrammen, vorzugsweise mindestens drei Typen von Teilhologrammen umfasst, wobei jeder Typ Licht eines spektralen Wellenlängenbereichs beugt. Beispielsweise kann ein Volumentransmissionshologramm so ausgebildet sein, dass es weißes Licht, welches aus rotem, grünem und blauem Licht vorgegebener Wellenlängen zusammengesetzt ist, und welches unter einem 45°-Winkel auf ein eben ausgebildetes Volumentransmissionshologramm auftrifft, jeweils entsprechend des jeweiligen Teilhologrammtyps beugt, so dass dieses aus dem Hologramm so austritt, als wäre dies unter 15°gegenüber einer Oberflächennormale des Hologramms eingestrahlt und gradlinig durch das Hologramm hindurchgetreten. Das gebeugte Licht trifft dann auf das darunterliegende Subpixelgebiet der Metallschicht und wird von dieser reflektiert, und tritt dann unter -15° gegenüber der Oberfläche aus. Das nicht gebeugte Rekonstruktionslicht tritt unter einem Winkel von -45° gegenüber der Oberflächennormal nach einer Reflexion an der Metallschicht aus. Vorausgesetzt wird jeweils, dass das entsprechend Subpixelgebiet nicht selektiv demetallisiert wurde.

Werden nun selektiv Bereiche (z.B. Subpixelgebiete) der Metallschicht bei der Laserpersonalisierung zerstört, so werden die Farbanteile der diesen Bereichen zugeordneten Unterbildpunkte nicht reflektiert, so dass die Farbe des entsprechenden Bildpunktes sich wie gewünscht ändert. Die beschriebenen Winkel sind nur exemplarisch gewählt. Vorzugsweise wird das gebeugte Licht nicht parallel zur Oberflächennormale der Metallschicht auf diese auftreffen, da ansonsten die Gefahr besteht, dass ein Teil des Lichts oder sämtliches Licht durch das Hologramm zurückgebeugt wird. Werden jedoch die Gesetzmäßigkeiten des Reflexionsgesetzes ausgenutzt, so weichen Ein- und Ausfallwinkel gemessen gegen die Oberflächennormale hinsichtlich ihres Vorzeichens, nicht jedoch ihres Betrags voneinander ab.

Da mit einer unterschiedlichen Farbwirkung hervorrufenden Unterbildpunkten ein schwarzer Farbton nicht oder nur unbefriedigend herstellbar ist, wird die Substratschicht, auf der die Metallschicht ausgebildet ist oder wird, vorzugsweise über einer laserfähigen Schicht angeordnet sowie mit dieser und der abdeckenden Substratschicht zu einem Dokumentenkörper zusammengefügt. Nach dem Demetallisieren eines Subpixelgebiets oder mehrerer Subpixelgebiete, besonders bevorzugt sämtlicher Subpixelgebiete eines Bildpunktes, kann durch eine weitere Einstrahlung fokussierten Laserlichts eine Karbonisierung der darunterliegenden laserfähigen Substratschicht erreicht werden und ein Bildpunkt mit einem Grauwert oder schwarz erzeugt werden. Vorzugsweise findet das Einstrahlen der Laserstrahlung, welche zur Verfärbung der laserfähigen Substratschicht dient, mittels gepulster Laserstrahlung und in der Weise statt, dass über eine Anzahl der genutzten Laserpulse in einem Zeitintervall der Grauwert bzw. die Schwärzung einstellbar ist.

Einen besonders guten Kontrast und ein helles farbiges Bild erhält man dann, wenn unterhalb der Substratschicht und, sofern eine laserfähige Substratschicht benutzt wird, unterhalb dieser laserfähigen Substratschicht eine Substratschicht verwendet wird, welche weiß oder transparent ausgebildet ist.

Es versteht sich, dass die Metallschicht nicht die gesamte Dokumentfläche überdecken muss. Es sind jedoch Ausführungsformen möglich, bei denen die Metallschicht die gesamte Fläche des Sicherheitsdokuments überspannt. Ebenso ist es möglich, dass die Metallschicht sowie gegebenenfalls zusätzlich das darauf angeordnete farbwirksame Muster in Form eines Patches oder Metallstreifens bereitgestellt oder hergestellt werden und so als Patch oder Streifen in ein Sicherheitsdokument vor einem Laminieren unterschiedlicher Substratschichten in das Sicherheitsdokument integriert werden.

In einer Ausführungsform liegen alle Subpixel in einer Ebene. Diese Ausführungsform ermöglicht eine einfache Integration und Personalisierung sowie eine kompakte Bauweise des Dokuments.

In einer weiteren Ausführungsform liegen nur jeweils gleichfarbige Subpixel in einer Ebene. Dieses ist von Vorteil, sofern die Subpixel zum Beispiel lithografisch aus einer flächigen Beschichtung hergestellt werden. Zusätzlich ergibt es sich, dass durch die Anordnung der unterschiedlichen Subpixel in unterschiedlichen Ebenen der Fokus eines personalisierenden Lasers für jede Farbe auf eine andere "Tiefe" eingestellt werden muss. Dieses stellt eine zusätzlich Hürde dar, die ein Fälscher, welcher ein nicht personalisiertes Dokument unrechtmäßig erhält, überwinden muss, um dieses zu personalisieren.

Nachfolgend wird die Erfindung unter Bezugnahme auf eine Zeichnung anhand bevorzugter Ausführungsformen näher erläutert. Hierbei zeigen:
- Fig. 1: eine Explosionszeichnung von Substratschichten, aus denen ein Sicherheitsdokumentenrohling gebildet wird;
- Fig. 2: eine schematische Darstellung eines beispielhaften farbwirksamen Musters, welches aus Bildpunkten und Unterbildpunkten zusammengesetzt ist;
- Fig. 3: eine schematische Querschnittsdarstellung durch einen Sicherheitsdokumentenrohling;
- Fig. 4: eine schematische Schnittdarstellung durch ein personalisiertes Sicherheitsdokument;
- Fig. 5: eine schematische Schnittansicht durch ein weiteres personalisiertes Sicherheitsdokument;
- Fig. 6: eine schematische Darstellung eines Ablaufdiagramms eines Verfahrens zum Herstellen eines Sicherheitsdokumentenrohlings; und
- Fig. 7: eine schematische Darstellung eines Verfahrens zur farbigen Laserindividualisierung/Laserpersonalisierung.

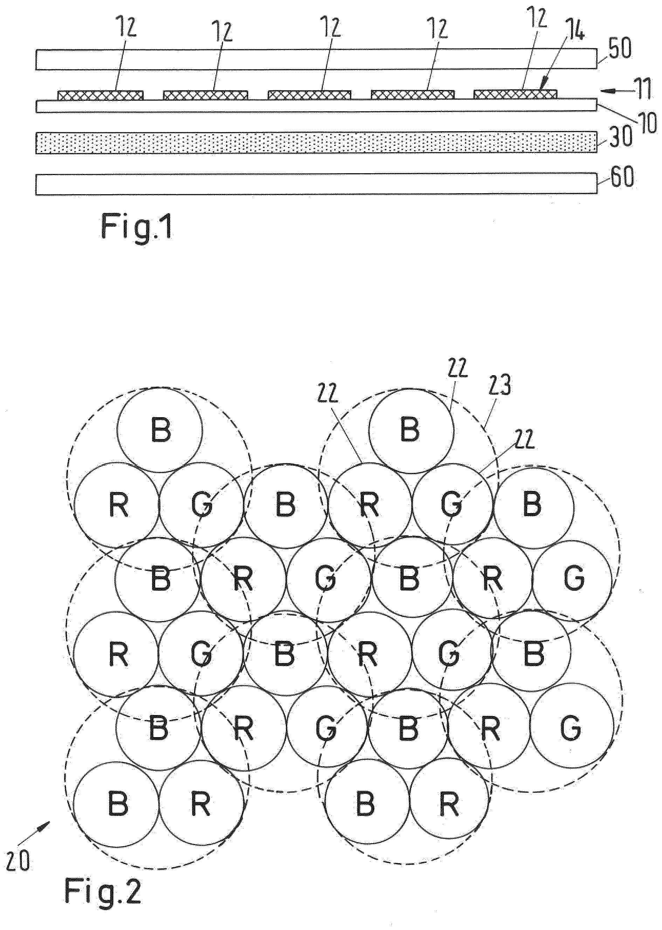

Anhand von Fig. 1 soll schematisch der Aufbau eines Sicherheitsdokumentenrohlings und dessen Herstellung erläutert werden. In allen Figuren sind die gleichen technischen Merkmale mit denselben Bezugszeichen gekennzeichnet.

Zur Herstellung wird eine Substratschicht 10 bereitgestellt, auf der eine Metallschicht 11 ausgebildet ist oder ausgebildet wird. Die Substratschicht 10 kann eine metallisierte Kunststofffolie sein. Bei dem Metall kann es sich um ein beliebiges Metall handeln, vorzugsweise wird es sich beispielsweise um Aluminium oder eine Aluminiumoxidlegierung handeln. Vorzugsweise weist die Metallschicht 11 eine spiegelnde Oberfläche 14 auf. Die Metallschicht 11 ist vorzugsweise in sogenannte Subpixelgebiete oder Subpixelgebiete 12 unterteilt. Diese sind erfindungsgemäß getrennt voneinander und beabstandet zueinander auf der Substratschicht 10 angeordnet oder ausgebildet. Wird eine metallisierte Folie als Substratschicht 10 mit der Metallschicht 11 bereitgestellt, so wird die Metallschicht 11 erfindungsgemäß strukturiert, um einzelne voneinander getrennte und beabstandete Subpixelgebiete 12 auszubilden. Bei einfachen Ausführungsformen kann auch eine unstrukturierte Metallschicht 11 verwendet werden.

Die Strukturierung der Metallschicht in die Subpixelbereiche oder Subpixelgebiete 12 erfolgt so, dass diese mit Unterbildpunkten 22 von Bildpunkten 23 eines farbwirksamen Musters 20 korrespondieren, welches exemplarisch in Fig. 2 dargestellt ist. Jedem Bildpunkt 23 sind bei dieser Ausführungsform drei Unterbildpunkte 22 zugeordnet, welche jeweils eine monochromatische Farbwirkung hervorrufen bzw. Farbe aufweisen. Über die Buchstaben R, G, B sind die Farben Rot, Grün, Blau entsprechend angedeutet, die die einzelnen Unterbildpunkte aufweisen. Die einzelnen Unterbildpunkte 22 sind jeweils einem Subpixelgebiet 12 der Metallschicht 11 zugeordnet.

Beispielsweise wird das Farbmuster 20 durch ein Aufbringen von Farbmitteln auf die entsprechenden Subpixelgebiete 12 auf der Metallschicht ausgebildet. Hierzu können Masken verwendet werden, um die unterschiedlichen Farbmittel aufzubringen. Hierbei werden jeweils die Masken so ausgebildet, dass jeweils nur die Subpixelgebiete durch die Maske freigegeben sind, welchen die entsprechende Farbe einer Gruppe von Unterbildpunkten zugeordnet ist. Die einzelnen Subpixelgebiete sind vorzugsweise kreisrund oder elliptisch ausgebildet. Entsprechend sind die Unterbildpunkte hieran angepasst ausgebildet. Bei dem dargestellten farbwirksamen Muster 20 weist jeder Bildpunkt 23 drei Unterbildpunkte 22 auf, die jeweils die Farben Rot, Grün und Blau aufweisen. Jeder Bildpunkt umfasst somit einen Unterbildpunkt 22, der rot ist, einen Unterbildpunkt 22, der grün ist, und einen Unterbildpunkt 22, der blau ist. Die Farbmittel bewirken nun, dass von den Subpixelgebieten jeweils nur monochromatisches oder weitgehend monochromatisches Licht reflektiert wird. Betrachtet eine Person die Metallschicht im Auflicht, so werden die einzelnen Bildpunkte als weiß wahrgenommen, da sich aufgrund der Farbaddition die Farben Rot, Grün und Blau zu dem Farbeindruck Weiß addieren.

Je nach Wahl der Farbmittel kann es sinnvoll sein, die Unterbildpunkte und/oder Subpixelgebiete mit unterschiedlichen Flächengrößen auszubilden, um einen gewünschten Ausgangsfarbton zu erzielen.

Um später eine farbige Personalisierung oder Individualisierung mithilfe des farbwirksamen Musters auszuführen, ist es notwendig, einzelne Unterbildpunkte "zu entfernen", so dass sich aufgrund der Farbmischung der verbleibenden Unterbildpunkte ein veränderter Farbeindruck ergibt. Wird beispielsweise der blaue Unterbildpunkt entfernt, so ergibt sich aufgrund der Farbmischung aus der roten und der grünen Farbe ein gelber Farbeindruck des reflektierten Lichts der den Unterbildpunkten zugeordneten Subpixelgebiete.

In der Regel ist das farbwirksame Muster regelmäßig ausgebildet. Es ist jedoch auch möglich ein farbwirksames Muster aus regelmäßig angeordneten Bildpunkten zuschaffen, jedoch die Unterbildpunkte geometrische unterschiedlich hinsichtlich ihrer Anordnung und/oder hinsichtlich ihrer monochromatischen Farbzuordnung variierend auszubilden. Für eine gewünschte farbige Markierung ist eine Kenntnis dieser Anordnung und der Farbzuordnung selbstverständlich notwendig. Diese kann beispielsweise mit einer bei der Herstellung vergebenen und in dem Dokumentenkörper abgespeicherten Seriennummer korreliert oder codiert sein. Beispielsweise kann sie auch in einer Datenbank abgelegt sein. Ein Fälscher, der einen noch unmarkierten Sicherheitsdokumentenrohling erhält, kann diesen nur mit Kenntnis der Anordnung und Farbzuordnung der Unterbildpunkte korrekt farbig markieren.

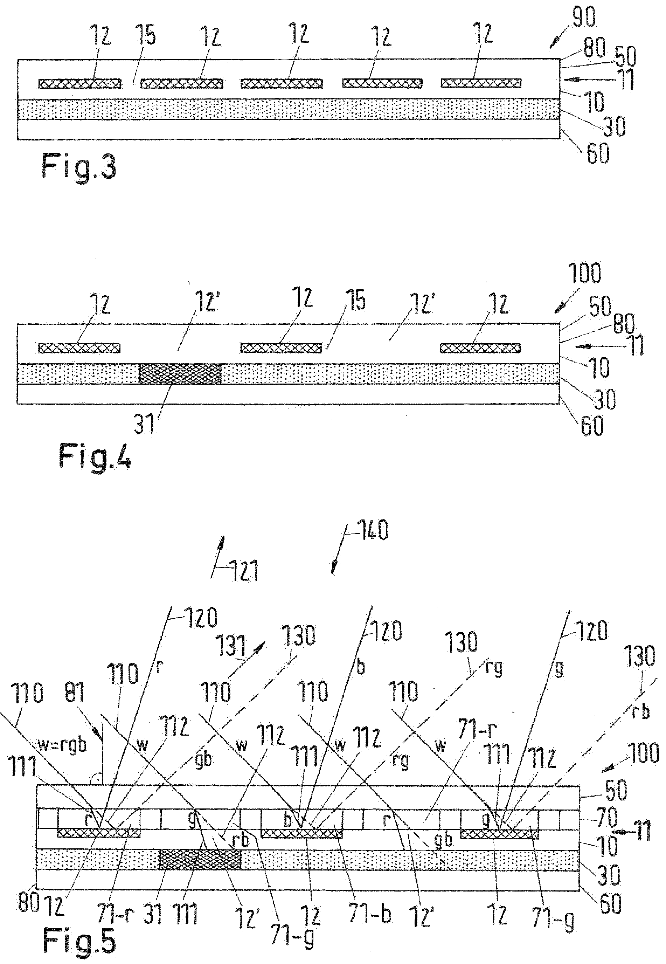

Um eine mechanische Beschädigung der Metallschicht 11 und eine Veränderung des farbwirksamen Musters zu verhindern, ist eine weitere Substratschicht 50 vorgesehen, die der Substratschicht 10 mit der Metallschicht 11 überlagert ist. Zusätzlich ist bei der dargestellten Ausführungsform eine laserfähige Substratschicht 30 vorgesehen, welche unterhalb der Substratschicht 10 mit der Metallschicht 11 angeordnet wird. Eine zusätzliche, vorzugsweise transparente oder weiße Substratschicht 60 bildet bei der dargestellten Ausführungsform die unterste Substratschicht. Die Substratschicht 10 mit der Metallschicht 11 und dem daraus ausgebildeten farbwirksamen Muster 20, die als Deckschicht dienende weitere Substratschicht 50, die laserfähige Substratschicht 30 und die zusätzliche Substratschicht 60 werden übereinander geschichtet und vorzugsweise in einem Hochdruck-Hochtemperatur-Laminierverfahren zu einem Dokumentenkörper 80 eines Sicherheitsdokumentenrohlings 90 zusammengefügt. Ein solcher Dokumentenrohling 90 ist schematisch im Querschnitt in Fig. 3 gezeigt.

Vorzugsweise sind die Substratschicht 10, die weitere Substratschicht 50, die laserfähige Substratschicht 30 und die zusätzliche Substratschicht 60 alle auf Basis desselben Kunststoffmaterials, beispielsweise Polycarbonat (PC), Polyethylen (PE), Polyvinylchlorid (PVC), Polyethylenterephthalat (PET) oder einem anderen Kunststoffmaterial hergestellt. Sind alle Substratschichten aus demselben Kunststoffmaterial oder auf Basis desselben Polymers hergestellt, so lassen sich die Substratschichten besonders gut zu einem Dokumentenkörper zusammenfügen. Aufgrund der Strukturierung der Metallschicht bilden sich zwischen den einzelnen Subpixelgebieten 12 Stege 15 aus, welche eine Delaminationsneigung insbesondere zwischen der Substratschicht 10 und der weiteren als Deckschicht dienende Substratschicht 50 vermindern.

In Fig. 4 ist ein personalisiertes Sicherheitsdokument 100 dargestellt, welches mittels Laserpersonalisierung beispielsweise aus dem Sicherheitsdokumentenrohling 90 nach Fig. 3 hergestellt ist. Bei der Laserpersonalisierung werden bzw. sind über einen Eintrag von Energie mittels elektromagnetischer Strahlung, insbesondere fokussierter Laserstrahlung gezielt einzelne Subpixelgebiete 12' der Metallschicht 11 demetallisiert, so dass der Dokumentenkörper an dieser Stelle transparent wird bzw. ist oder zumindest die Farbwirkung des dem Subpixelgebiet 12' zugeordneten Unterbildpunkts 22 des farbwirksamen Musters 20 seine Wirkung verliert bzw. verloren hat. Aufgrund der Farbmischung ändert sich somit der Farbeindruck von Bildpunkten, bei denen einzelne Unterbildpunkte bzw. deren zugehörige Subpixelgebiete entfernt oder zerstört sind.

Um eine Tönung des Farbeindrucks, eine Schattierung oder sogar einen grauen oder schwarzen Farbeindruck eines Bildpunkts herzustellen, werden einzelne oder alle Subpixelgebiete des Bildpunkts entfernt und anschließend eine Lasermarkierung 31 über eine Karbonisierung der laserfähigen Substratschicht 30 bzw. der daraus entstandenen Materialschicht des Dokumentenkörpers 80 herbeigeführt. Insbesondere wenn die zusätzliche Substratschicht 60 weiß ausgebildet ist, kann über eine graue oder schwarze Lasermarkierung eines einzelnen Subpixels, das zur Erzielung eines Farbeindrucks eines Pixels entfernt worden ist und durch einen Grauwert ersetzt wird, eine Helligkeit und/oder Intensität der sich ergebenden Farbe des Bildpunktes beeinflusst werden. Wird das Subpixelgebiet des Unterbildpunkts lediglich entfernt, so ist die aus der Farbmischung resultierende Farbe des Bildpunkts der verbleibenden Unterbildpunkte heller, als wenn in dem Bereich des entfernten Subpixels der darunterliegenden laserfähigen Schicht eine graue oder schwarze Lasermarkierung in den Dokumentenkörper 80 eingebracht wird.

Neben der Verwendung von Farbmitteln zum Ausbilden des farbwirksamen Musters 20 ist es möglich, beugende Strukturen, beispielsweise in Form eines Hologramms 70 zu verwenden, welches aus unterschiedlichen Teilhologrammen 71 besteht. Eine solche Ausführungsform ist exemplarisch als Schnittansicht in Fig. 5 dargestellt. Die Ausführungsform nach Fig. 5 unterscheidet sich von der nach Fig. 4 dadurch, dass zwischen der als Deckschicht dienenden weiteren Substratschicht 50 und der Substratschicht 10 mit der Metallschicht 11 ein Hologramm 70 eingefügt ist, welches eine an die Subpixelgebiete 12, 12' angepasste Teilhologrammstruktur von Teilhologrammen 71 umfasst. Das Hologramm 70 als Ganzes und die Teilhologramme 71 sind in der dargestellten Ausführungsform jeweils als Volumentransmissionshologramme ausgebildet. Dies bedeutet, dass diese eine hohe Wellenlängenselektivität hinsichtlich des Rekonstruktionslichts aufweisen. Vorzugsweise sind sämtliche Teilhologramme 71 so ausgebildet, dass Licht einer bestimmten Wellenlänge oder eines eng selektierten Wellenlängenbereichs jeweils um denselben Winkel gegenüber einem einfallenden Rekonstruktionslichtstrahl 110 auf ein entsprechend darunter befindliches Subpixelgebiet 12, 12' beugen. Bei der dargestellten Ausführungsform wird angenommen, dass weißes Rekonstruktionslicht, welches rotes (r), grünes (g) und blaues (b) Spektrallicht umfasst und unter 45° zur Oberflächennormale 81 des Dokumentenkörpers 80 auf dieses Sicherheitsdokument 100 auftrifft und von den Teilhologrammen 71 jeweils wellenlängenselektiv gebeugt wird. Ein Teilhologramm 71-r beugt beispielsweise ausschließlich Licht der vorgegebenen roten Wellenlänge und lässt grünes und blaues Licht ungebeugt passieren. Dieses ungebeugte Licht 112 ist gestrichelt dargestellt. Ein Teilhologramm 71-g beugt hingegen grünes Licht und lässt blaues und rotes Licht ungebeugt passieren. Ein Teilhologramm 71-b schließlich beugt blaues Licht und lässt rotes und grünes Licht ungehindert passieren. Aufgrund der Beugung trifft das von den Teilhologrammen gebeugte Licht 111 unter einem abweichenden Winkel auf die Subpixelgebiete 12 als das ungehindert die Teilhologramme passierende ungebeugte Licht 112 des Rekonstruktionslichtstrahls 110. Das gebeugte Licht 111 tritt somit nach der Reflexion an den entsprechend darunter angeordneten Subpixelgebieten als gebeugtes reflektiertes Licht 120 unter einer abweichenden Richtung 121 aus dem Sicherheitsdokument 100 aus als das ungebeugte an den Subpixelgebieten reflektierte Licht 130. Dieses tritt unter einer Richtung 131 aus. Somit kann unter einer Betrachtungsrichtung 140 eine farbig individualisierte Information wahrgenommen werden, welche durch das selektive Entfernen und/oder Zerstören, d.h. das Demetallisieren einzelner Subpixelgebiete 12' hinsichtlich seiner Farbigkeit der einzelnen Bildpunkte beeinflusst ist. Auch bei dieser Ausführungsform ist eine gezielte Karbonisierung einzelner oder aller Subpixel eines Bildpunktes möglich. Hierbei entstehen Markierungen 31.

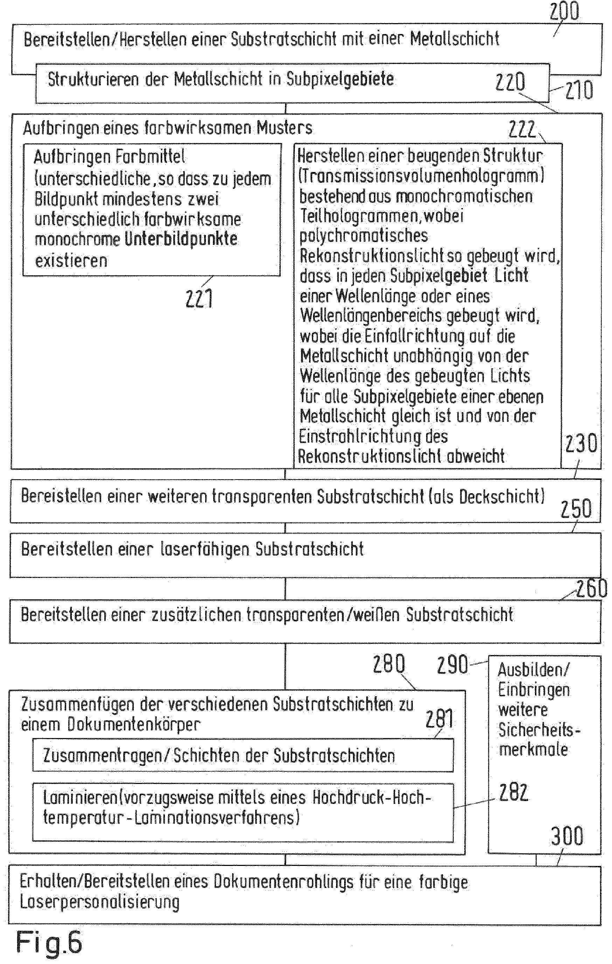

In Fig. 6 ist schematisch ein Ablaufdiagramm der Herstellung eines Sicherheitsdokumentenrohlings dargestellt. Zunächst wird eine Substratschicht mit einer Metallschicht bereitgestellt oder eine Substratschicht mit einer Metallschicht hergestellt.

Das Herstellen der Metallschicht kann beispielsweise mittels eines Aufdampfens von Metall auf eine Kunststofffolie erfolgen. Wird hierbei eine Maske verwendet, so kann die Metallschicht strukturiert hergestellt werden, so dass bei der Herstellung automatisch Subpixelgebiete entstehen. Wird die Metallschicht zunächst geschlossen flächig hergestellt, so kann diese anschließend mittels eines lithografischen Verfahrens strukturiert werden. Grundsätzlich ist es möglich, die Metallfolie auf jede beliebige Art und Weise herzustellen und zu strukturieren. Bei einigen Ausführungsformen wird auch eine unstrukturierte Metallschicht verwendet. Wie im Verfahrensschritt 210 angedeutet ist, kann die Metallschicht während oder nach dem Bereitstellen/Herstellen strukturiert werden. Anschließend wird ein farbwirksames Muster aufgebracht 220. Dieses kann einerseits erfolgen, indem Farbmittel aufgebracht werden 221. Hierbei werden bei einer Ausführungsform unterschiedliche Farbmittel aufgebracht 221, so dass zu jedem Bildpunkt mindestens zwei unterschiedliche farbwirksame monochrome Unterbildpunkte entstehen. Vorzugsweise entstehen drei oder mehr farbwirksame monochrome Unterbildpunkte je Bildpunkt. Alternativ kann das farbwirksame Muster über das Herstellen einer Beugungsstruktur 222, beispielsweise über das Ausbilden eines Volumentransmissionshologramms bestehend aus einer Matrix verschiedenartiger monochromatischer Teilhologramme hergestellt werden. Hierbei ist die beugende Struktur so ausgebildet oder wird so ausgebildet, dass polychromatisches Rekonstruktionslicht so gebeugt wird, dass in jedem Unterbildpunktbereich, d.h. auf jedes einem Teilhologramm zugeordnetes Subpixelgebiet Licht einer Wellenlänge oder eines Wellenlängenbereichs gebeugt wird, wobei die Einfallsrichtung auf die Metallschicht unabhängig von der Wellenlänge des gebeugten Lichts vorzugsweise für alle Subpixelgebiete einer ebenen Metallschicht gleich ist und von der Einstrahlungsrichtung des Rekonstruktionslichts abweicht.

Zusätzlich wird eine weitere transparente Substratschicht bereitgestellt 230. Bei der dargestellten Ausführungsform werden zusätzlich auch noch eine laserfähige Substratschicht 250 und eine zusätzliche transparente oder weiße Substratschicht 260 bereitgestellt. Die einzelnen Substratschichten werden gemeinsam mit der Metallschicht und dem darauf ausgebildeten Farbmuster zu einem Dokumentenkörper zusammengefügt 280. Zeitgleich oder vorher können weitere Sicherheitsmerkmale ausgebildet oder eingebracht werden 290. Das Zusammenfügen der verschiedenen Substratschichten zu einem Dokumentenkörper erfolgt vorzugsweise über ein Zusammentragen der Substratschichten bzw. ein Übereinanderschichten der Substratschicht 281 und ein anschließendes Laminieren 282, vorzugsweise mittels eines Hochdruck-Hochtemperatur-Laminationsverfahrens. Bei diesem Verfahren erhält man einen Dokumentenrohling für eine farbige Laserpersonalisierung 300.

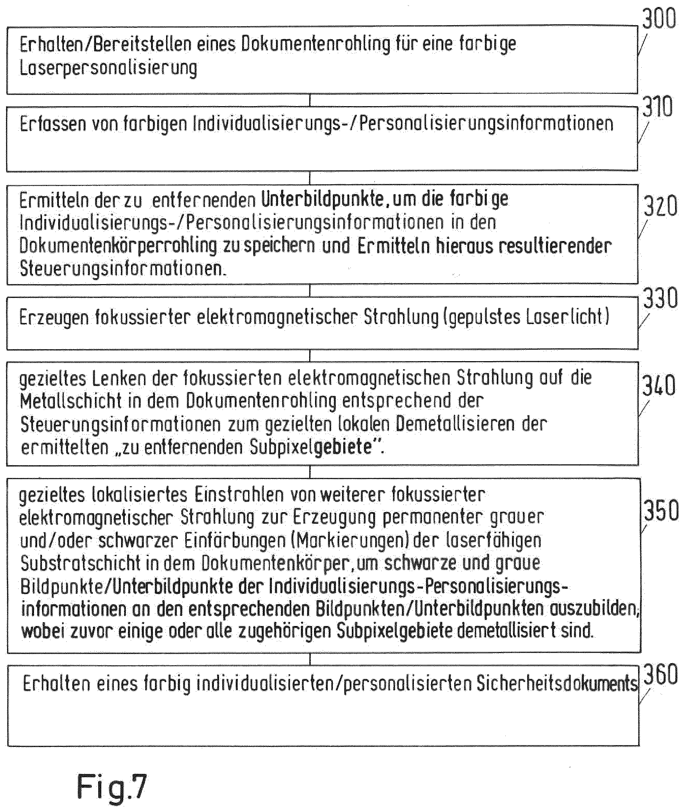

In Fig. 7 ist exemplarisch ein Verfahren zur farbigen Laserpersonalisierung dargestellt. Schließen sich diese Verfahrensschritte unmittelbar an die des in Fig. 6 dargestellten Verfahrens an, so wird aus der Kombination der beiden Verfahren ein Verfahren zur Herstellung eines farbig laserpersonalisierten Sicherheitsdokuments.

Das Verfahren gemäß Fig. 7 beginnt somit mit dem Verfahrensschritt Bereitstellen bzw. Erhalten eines Dokumentenrohlings für eine farbige Laserpersonalisierung 300. Um die farbige Laserpersonalisierung und/oder Individualisierung ausführen zu können, werden farbige Individualisierungs- und/oder Personalisierungsinformationen erfasst 310. Hierbei bedeutet das Wort "farbige", dass die Personalisierungs- und/oder Individualisierungsinformationen neben einem Inhalt auch Farbinformationen umfassen, die angeben, in welcher Farbe der jeweils enthaltene Inhalt in dem Sicherheitsdokument ausgebildet werden soll. Anschließend werden die zu entfernenden Unterbildpunkte ermittelt, die zu entfernen sind, um Individualisierungs-/Personalisierungsinformationen in den Dokumentenrohling zu speichern und die aus dieser Ermittlung resultierenden Steuerungsinformationen abgeleitet 320. Dies bedeutet, dass die Subpixelgebiete bestimmt werden, welche zu demetallisieren sind. Anschließend wird fokussierte elektromagnetische Strahlung erzeugt, welche vorzugsweise in Form fokussierter gepulster Laserstrahlung erzeugt wird 330. Gemäß den Steuerungsinformationen wird die fokussierte elektromagnetische Strahlung, beispielsweise die fokussierte Laserstrahlung, auf die Metallschicht in dem Dokumentenrohling gelenkt, um ein gezieltes lokales Demetallisieren der ermittelten, zu entfernenden Subpixelgebiete auszuführen 340. Anschließend wird optional durch gezieltes lokalisiertes Einstrahlen von weiterer fokussierter elektromagnetischer Strahlung, welche mittels desselben Lasers bereitgestellt sein kann wie die Strahlung zur Demetallisierung, eine Erzeugung permanenter grauer und/oder schwarzer Markierungen in der laserfähigen Substratschicht in dem Dokumentenkörper herbeigeführt, um schwarze und/oder graue Bildpunkte der Individualisierungs-/Personalisierungsinformationen in den entsprechenden Bildpunkten auszubilden und/oder eine Farbabstufung der Farbwirkung herbeizuführen, welche sich aufgrund der Farbaddition verbleibender Unterbildpunkte eines Bildpunktes ergeben 350. Man erhält ein farbig individualisiertes/personalisiertes Sicherheitsdokument 360.

Es versteht sich, dass lediglich beispielhafte Ausführungsformen beschrieben sind. Die einzelnen in den unterschiedlichen Ausführungsformen beschriebenen Merkmale können in Kombination genutzt werden, um die Erfindung auszuführen. Beispielsweise kann das farbwirksame Muster teilweise mittels Farbmitteln und teilweise mittels Beugungsstrukturen ausgebildet werden.

### Bezugszeichenliste

- 10: Substratschicht
- 11: Metallschicht
- 12: Subpixelgebiete
- 12': demetallisierte Subpixelgebiete
- 14: spiegelnde Oberfläche
- 15: Stege
- 20: farbwirksames Muster
- 22: Unterbildpunkte
- 23: Bildpunkte
- 30: laserfähige Substratschicht
- 31: Markierung
- 50: weitere Substratschicht (als Deckschicht)
- 60: zusätzliche Substratschicht (vorzugsweise weiß/transparent)
- 70: Hologramm
- 71: Teilhologramme
- 71-r: rotes Licht beugendes Teilhologramm
- 71-g: grünes Licht beugendes Teilhologramm
- 71-b: blaues Licht beugendes Teilhologramm
- 80: Dokumentenkörper
- 81: Oberflächennormale
- 90: Dokumentenrohling
- 100: farbig laserpersonalisiertes Sicherheitsdokument
- 110: Rekonstruktionslichtstrahl
- 111: gebeugtes Licht
- 112: ungebeugtes Licht
- 120: gebeugtes und reflektiertes Rekonstruktionslicht
- 121: Richtung des gebeugten und reflektierten Lichts
- 130: ungebeugtes reflektiertes Rekonstruktionslicht
- 131: Richtung des ungebeugten und reflektierten Lichts
- 140: Betrachtungsrichtung
- 200-300: Verfahrensschritte zum Ausbilden eines Sicherheitsdokumentenrohlings
- 300-360: Verfahrensschritte zur farbigen Laserpersonalisierung eines Sicherheitsdokuments

## Patentansprüche

1. Verfahren zur Herstellung eines farbigen laserpersonalisierbaren Sicherheitsdokumentenrohlings (90) oder eines Sicherheitsdokuments (100), umfassend die Schritte:
Bereitstellen einer Substratschicht (10) mit einer Metallschicht (11) oder Aufbringen einer Metallschicht (11) auf eine Substratschicht (10);
Ausbilden eines farbwirksamen Musters (20) in oder auf der Metallschicht (11), wobei das Muster (20) eine Bildpunktstruktur aufweist und jeder Bildpunkt (23) mindestens zwei Unterbildpunkte (22) umfasst, welche eine monochromatische Farbwirkung hervorrufen;
Zusammenfügen der Substratschicht (10) mit mindestens einer weiteren transparenten Substratschicht (50) zu einem Dokumentenkörper (80),
**dadurch gekennzeichnet, dass**
die Metallschicht (11) strukturiert wird oder so strukturiert bereitgestellt wird, dass jedem Unterbildpunkt (22) ein Subpixelgebiet (12) zugeordnet ist, wobei die den Unterbildpunkten (22) zugeordneten Subpixelgebiete (12) von benachbarten Subpixelgebieten (12) getrennt und beabstandet sind.

2. Verfahren nach Anspruch 1, **dadurch gekennzeichnet, dass** die Subpixelgebiete in einer kreisförmigen oder ellipsenförmigen geometrischen Form strukturiert werden.

3. Verfahren nach einem der Ansprüche 1 oder 2, **dadurch gekennzeichnet, dass** die Subpixelgebiete (12) mittels Aufdampfen gefertigt werden.

4. Verfahren nach einem der Ansprüche 1 oder 2, **dadurch gekennzeichnet, dass** die Subpixelgebiete (12) mittels eines lithografischen Verfahrens ausgebildet werden.

5. Verfahren nach einem der Ansprüche 1 bis 4, **dadurch gekennzeichnet, dass** zum Ausbilden des farbwirksamen Musters (20) Unterbildpunkte (22) in Form von Teilhologrammen (71, 71-r, 71-g, 71-b) eines Hologramms (70) hergestellt und/oder aufgebracht werden.

6. Verfahren nach einem der Ansprüche 1 bis 4, **dadurch gekennzeichnet, dass** das farbwirksame Muster (20) durch Aufbringen von Farbmitteln auf oder Einbringen von Farbmitteln in die Metallschicht (11) ausgebildet wird.

7. Sicherheitsdokumentenrohling (90) für eine farbige Laserpersonalisierung, umfassend einen Dokumentenkörper (80), der eine Metallschicht (11), und ein in oder auf der Metallschicht (11) ausgebildetes farbwirksames Muster (20) aufweist, wobei das farbwirksame Muster (20) eine Bildpunktstruktur aufweist und jedem Bildpunkt (23) mindestens zwei Unterbildpunkte (22) zugeordnet sind, welche eine monochromatische Farbwirkung hervorrufen, und die Metallschicht (11) und das farbwirksame Muster (20) durch eine oder mehrere transparente Substratschichten (50) abgedeckt sind,
**dadurch gekennzeichnet, dass**
die Metallschicht (11) in Subpixelgebiete (12) strukturiert ist, wobei jedem Subpixelgebiet (12) ein Unterbildpunkt (22) des farbwirksamen Musters (20) zugeordnet ist, wobei die den Unterbildpunkten (22) zugeordneten Subpixelgebiete (12) von benachbarten Subpixelgebieten (12) getrennt und beabstandet sind.

8. Verfahren zur Herstellung eines Sicherheitsdokuments (100) mittels farbiger Laserpersonalisierung eines Sicherheitsdokumentenrohlings (90), der nach einem Verfahren gemäß der Ansprüche 1 bis 6 hergestellt ist, umfassend die Schritte:
Erfassen einer farbigen Individualisierungs- und/oder Personalisierungsinformation;
Ermitteln der Unterbildpunkte (22) und der zugehörigen Bereiche der Metallschicht (11), deren Farbwirkung durch Demetallisierung zur Erzielung der gewünschten farbigen Darstellung der Individualisierungs- und/oder Personalisierungsinformationen aufgehoben werden muss;
Erzeugen eines fokussierten gepulsten Laserstrahls;
Lenken des fokussierten Laserstrahls auf die Metallschicht (11), so dass gezielt die ermittelten zu demetallisierenden Bereiche der Metallschicht (11) lokal demetallisiert werden, indem den Unterbildpunkten (22) zugeordnete, von benachbarten Subpixelgebieten getrennte und beabstandete Subpixelgebiete (12), in die die Metallschicht (11) strukturiert ist, demetallisiert werden, so dass die Farbwirkung der diesen gezielt demetallisierten Bereichen zugeordneten Unterbildpunkte beseitigt wird.

9. Verfahren nach Anspruch 8, **dadurch gekennzeichnet, dass** zum Ausbilden einer schwarzen oder grauen Farbwirkung eines Bildpunktes und/oder zum Abtönen einer sich aus verbleibenden farbwirksamen Unterbildpunkten (22) ergebenden Mischfarbe des Bildpunktes (23) nach dem lokalen Demetallisieren mindestens eines Bereichs, der einem Unterbildpunkt (22) dieses Bildpunktes (23) zugeordnet ist, eine Schwärzung einer unterhalb der Metallschicht (11) angeordneten laserfähigen Kunststoffschicht über eine weitere gezielte Einstrahlung fokussierter Laserstrahlung durch einen oder mehrere lokal demetallisierte Bereiche des Bildpunktes (23) bewirkt wird.

10. Sicherheitsdokument (100) umfassend einen Dokumentenkörper (80), der eine Metallschicht (11), und ein in oder auf der Metallschicht (11) ausgebildetes farbwirksames Muster (20) aufweist, wobei das farbwirksame Muster (20) eine Bildpunktstruktur aufweist und jedem Bildpunkt (23) mindestens zwei Unterbildpunkte (22) zugeordnet sind, welche eine monochromatische Farbwirkung hervorrufen, und die Metallschicht (11) in Subpixelgebiete (12) strukturiert ist, sodass jedem Unterbildpunkt (22) ein Subpixelgebiet (12) zugeordnet ist, das von den benachbarten Subpixelgebieten (12) getrennt ist und diese benachbarten Subpixelgebiete (12) voneinander beabstandet sind, und die Metallschicht (11) und das farbwirksame Muster (20) durch eine oder mehrere transparente Substratschichten (50) abgedeckt sind und in der Metallschicht Unterbildpunkten (22) zugeordnete Subpixelgebiete (12') demetallisiert sind, so dass in dem Dokumentenkörper (80) eine Information farbig gespeichert ist.

## Claims

1. Method for producing a coloured laser-personalisable security document blank (90) or a security document (100), comprising the steps:
providing a substrate layer (10) having a metal layer (11) or applying a metal layer (11) onto a substrate layer (10);
forming a colour-effective pattern (20) in or on the metal layer (11), wherein the pattern (20) has a pixel structure and each pixel (23) comprises at least two sub-pixels (22), which cause a monochromatic colour effect;
joining together the substrate layer (10) with at least one further transparent substrate layer (50) to form a document body (80),
**characterised in that**
the metal layer (11) is structured or provided as structured in such a way that a sub-pixel region (12) is allocated to each sub-pixel (22), wherein the sub-pixel regions (12) allocated to the sub-pixels (22) are separated and spaced apart from adjacent sub-pixel regions (12).

2. Method according to claim 1, **characterised in that** the sub-pixel regions are structured in a circular or elliptical geometric shape.

3. Method according to any one of claims 1 or 2, **characterised in that** the sub-pixel regions (12) are produced by means of vapour deposition.

4. Method according to any one of claims 1 or 2, **characterised in that** the sub-pixel regions (12) are formed by means of a lithographic process.

5. Method according to any one of claims 1 to 4, **characterised in that**, in order to form the colour-effective pattern (20), sub-pixels (22) are produced and/or applied in the form of part-holograms (71, 71-r, 71-g, 71-b) of a hologram (70).

6. Method according to any one of claims 1 to 4, **characterised in that** the colour-effective pattern (20) is formed by the application of colouring agents or the introduction of colouring agents on or into the metal layer (11).

7. Security document blank (90) for a coloured laser personalisation, comprising a document body (80), which in turn comprises a metal layer (11) and a colour-effective pattern (20) formed in or on the metal layer (11), wherein the colour-effective pattern (20) comprises a pixel structure, and at least two sub-pixels (22) are allocated to each pixel (23), which cause a monochromatic colour effect, and the metal layer (11) and the colour-effective pattern (20) are covered by one or more transparent substrate layers (50),
**characterised in that**
the metal layer (11) is structured into sub-pixel regions (12), wherein a sub-pixel (22) of the colour-effective pattern (20) is allocated to sub-pixel region (12), and wherein the sub-pixel regions (12) allocated to the sub-pixels (22) are separated and spaced apart from adjacent sub-pixel regions (12).

8. Method for producing a security document (100) by means of coloured laser personalisation of a security document blank (90), which is produced in accordance with a method according to claims 1 to 6, comprising the steps:
acquiring an item of coloured individualisation and/or personalisation information;
determining the sub-pixels (22) and the associated regions of the metal layer (11), of which the colour effect must be emphasised by demetallisation in order to achieve the desired coloured representation of the individualisation and/or personalisation information;
producing a focused pulsed laser beam;
directing the focused laser beam onto the metal layer (11), such that, in a specific manner, the regions of the metal layer (11) which have been determined for demetallisation are demetallised locally, in that the sub-pixel regions (12), allocated to the sub-pixels (22) and separated and spaced apart from adjacent sub-pixel regions (12), into which the metal layer (11) is structured, are demetallised, such that the colour effect of the sub-pixels allocated to these specifically demetallised regions is obviated.

9. Method according to claim 8, **characterised in that**, in order to form a black or grey colour effect of a pixel and/or to tone down a mixed colour of the pixel (23) resulting from remaining colour-effective sub-pixels (22) after the local demetallising of at least one region, which is allocated to a sub-pixel (22) of this pixel (23), a blackening is carried out of a laser-capable plastic layer arranged beneath the metal layer (11), by means of a further targeted beaming of focused laser radiation through one or more locally demetallised regions of the pixel (23).

10. Security document (100), comprising a document body (80), which in turn comprises a metal layer (11) and a colour-effective pattern (20) formed in or on the metal layer (11), wherein the colour-effective pattern (20) comprises a pixel structure, and at least two sub-pixels (22) are allocated to each pixel (23), which cause a monochromatic colour effect, and the metal layer (11) is structured into sub-pixel regions (12), such that a sub-pixel region (12) is allocated to each sub-pixel (22), which is separated from the adjacent sub-pixel regions (12), and these adjacent sub-pixel regions (12) are spaced apart from one another, and the metal layer (11) and the colour-effective pattern (20) are covered by one or more transparent substrate layers (50), and, in the metal layer, sub-pixel regions (12') allocated to the sub-pixels (22) are demetallised, such that an item of information is stored in colour in the document body (80).

## Revendications

1. Procédé servant à fabriquer une ébauche de document de sécurité (90) en couleur pouvant être personnalisée au laser ou un document de sécurité (100), comprenant les étapes suivantes consistant à :
fournir une couche de substrat (10) avec une couche de métal (11) ou appliquer une couche de métal (11) sur une couche de substrat (10) ;
réaliser un motif (20) actif sur la couleur dans ou sur la couche de métal (11), dans lequel le motif (20) présente une structure de pixel et chaque pixel (23) comprend au moins deux sous-pixels (22), qui entraînent une action monochromatique sur la couleur ;
assembler la couche de substrat (10) à au moins une autre couche de substrat (50) transparente en un corps de document (80),
**caractérisé en ce que**
la couche de métal (11) est structurée ou est fournie en étant structurée de telle manière qu'une zone de sous-pixel (12) est associée à chaque sous-pixel (22), dans lequel les zones de sous-pixel (12) associées aux sous-pixels (22) sont séparées et tenues à distance des zones de sous-pixel (12) adjacentes.

2. Procédé selon la revendication 1, **caractérisé en ce que** les zones de sous-pixel sont structurées sous une forme géométrique de forme circulaire ou de forme elliptique.

3. Procédé selon l'une quelconque des revendications 1 ou 2, **caractérisé en ce que** les zones de sous-pixel (12) sont produites au moyen d'une évaporation.

4. Procédé selon l'une quelconque des revendications 1 ou 2, **caractérisé en ce que** les zones de sous-pixel (12) sont réalisées au moyen d'un procédé lithographique.

5. Procédé selon l'une quelconque des revendications 1 à 4, **caractérisé en ce que** des sous-pixels (22) sont fabriqués et/ou appliqués sous la forme d'hologrammes partiels (71, 71-r, 71-g, 71-b) d'un hologramme (70) afin de réaliser le motif (20) actif sur la couleur.

6. Procédé selon l'une quelconque des revendications 1 à 4, **caractérisé en ce que** le motif (20) actif sur la couleur est réalisé par l'application de colorants sur la couche de métal ou par l'introduction de colorants dans la couche de métal (11).

7. Ebauche de document de sécurité (90) pour une personnalisation au laser de la couleur, comprenant un corps de document (80), qui présente une couche de métal (11) et un motif (20) actif sur la couleur réalisé dans ou sur la couche de métal (11), dans laquelle le motif (20) actif sur la couleur présente une structure de pixel et au moins deux sous-pixels (22) sont associés à chaque pixel (23), lesquels entraînent une action monochromatique sur la couleur, et la couche de métal (11) et le motif (20) actif sur la couleur sont recouverts par une ou plusieurs couches de substrat (50) transparentes, **caractérisée en ce que**
la couche de métal (11) est structurée en des zones de sous-pixel (12), dans laquelle un sous-pixel (22) du motif (20) actif sur la couleur est associé à chaque zone de sous-pixel (12), dans laquelle les zones de sous-pixel (12) associées aux sous-pixels (22) sont séparées et tenues à distance de zones de sous-pixel (12) adjacentes.

8. Procédé servant à fabriquer un document de sécurité (100) au moyen d'une personnalisation au laser de la couleur d'une ébauche de document de sécurité (90), qui est fabriquée selon un procédé selon les revendications 1 à 6, comprenant les étapes suivantes consistant à :
détecter une information en couleur d'individualisation et/ou de personnalisation ;
déterminer les sous-pixels (22) et les zones associées de la couche de métal (11), dont l'action sur la couleur doit être supprimée par démétallisation afin d'obtenir l'affichage en couleur souhaité des informations d'individualisation et/ou de personnalisation ;
générer un faisceau laser concentré pulsé ;
diriger le faisceau laser concentré sur la couche de métal (11) de sorte que de manière ciblée les zones à démétalliser déterminées de la couche de métal (11) soient localement démétallisées par le fait que des zones de sous-pixel (12) associées aux sous-pixels (22), séparées et tenues à distances des zones de sous-pixel adjacentes, dans lesquelles la couche de métal (11) est structurée, sont démétallisées si bien que l'action sur la couleur des sous-pixels associés auxdites zones démétallisées de manière ciblée est écartée.

9. Procédé selon la revendication 8, **caractérisé en ce qu'**une autre irradiation ciblée d'un faisceau laser concentré à travers une ou plusieurs zones localement démétallisées du pixel (23) donne lieu à un noircissement d'une couche de plastique compatible à l'utilisation du laser disposée sous la couche de métal (11) afin de réaliser une action sur la couleur noire ou grise d'un pixel et/ou afin de teinter une couleur mélangée, résultant des sous-pixels (22) restants actifs sur la couleur, du pixel (23) après la démétallisation locale d'au moins une zone, qui est associée au sous-pixel (22) dudit pixel (23).

10. Document de sécurité (100) comprenant un corps de document (80), qui présente une couche de métal (11) et un motif (20) actif sur la couleur réalisé dans ou sur la couche de métal (11), dans lequel le motif (20) actif sur la couleur présente une structure de pixel et au moins deux sous-pixels (22) sont associés à chaque pixel (23), lesquels entraînent une action monochromatique sur la couleur, et la couche de métal (11) est structurée en des zones de sous-pixel (12) de sorte qu'une zone de sous-pixel (12) est associée à chaque sous-pixel (22), laquelle est séparée des zones de sous-pixel (12) adjacentes et lesdites zones de sous-pixel (12) adjacentes sont tenues à distance les unes des autres, et la couche de métal (11) et le motif (20) actif sur la couleur sont recouverts par une ou plusieurs couches de substrat (50) transparentes et des sous-pixels (22) de zones de sous-pixel (12') associées sont démétallisés dans la couche de métal de sorte qu'une information est mémorisée en couleur dans le corps de document (80).
